# EUROPEAN PATENT APPLICATION

(11) **EP 2 781 843 A1**
(43) Date of publication of application: **24.09.2014**
(21) Application number: 13425042.2
(22) Date of filing: 22.03.2013
(51) Int. Cl.: F24D 13/02

(54) **Manufacture of modular flooring with an electrical heating system**

(71) Applicant: VKB Energy S.r.l., 29010 Ziano Piacentino (PC) (IT)
(72) Inventor: Micoli, Simone Francesco, 29010 Ziano Piacentino (PC) (IT); Di Canio, Carmine, 29015 Castel San Giovanni (PC) (IT)
(74) Representative: Emmi, Mario

(57) **Abstract**

The present invention relates to a module (1) for forming a heating flooring system and comprising:
- Electrical means (5) for the generation of heat and a power cable (6) for supplying said electrical means (5) with electricity;

In accordance with the invention, the module is configured in such a way that, when brought alongside and in substantial contact with another module (1), it forms a channel (40) for the passage of the supply cable (6), said channel (40) running along at least part of the line of juxtaposition of said two modules.

## Description

### Scope of the invention

The present invention relates to the technical field concerned with the production of flooring having an integrated heating system.

In particular the invention relates to an innovative modular floor which provides for an integrated heating system of electrical type, and each module of which may be applied directly onto the flooring to be covered.

### Brief account of the prior art

Heated floor systems have been in existence for a long time and are used both in the home and in offices.

Heated flooring thus foresees heating systems positioned beneath the actual flooring, in such a way that a certain amount of heat is emitted upwards from the flooring. The obvious technical effect is that the flooring is also at a comfortable temperature, and the entire surrounding environment heats up in a more uniform manner.

With the current technology, the market offers various solutions for heating floor systems.

One of these solutions provides for a complex system of tubes (called coils) that are spread out beneath the treadable floor surface, which may be made for example of wood.

A hot fluid is made to flow in the coils, generally a fluid such as water (exactly as in conventional central heating systems). The circulation of the hot water heats the tubes, and the heat irradiates to the flooring, which heats up.

However, although functional, this system presents various technical disadvantages.

One of these is that it is necessary to plan and install a dense network of coils which cover the whole area of interest on which the floor system is to be laid. This type of system is particularly expensive and complex, and necessitates a specialist installation operation which results in long laying times. Above all, this type of structure is invasive and requires a major technical operation for permanently fixing and directing all the tubing (exactly as for traditional central heating systems). In the event of failure, not only a specialist intervention is necessary, but this almost always involves breaking up the floor and lengthy repairs.

Not least in importance, accidental breakage of a tube in which a fluid flows can create losses which may cause severe damage to the flooring.

Finally, in the event of the user deciding to remove this type of floor system, a long removal operation will of course be necessary.

With a view to resolving the above-mentioned technical disadvantages, an alternative solution is also known which provides for the use of modules which, when placed side by side, form the treadable floor system.

These modules foresee electrical resistors in their interior which, when powered by an electrical current, heat up and produce heat.

This solution is obviously advantageous in that it replaces a fixed network of tubes, simplifying the installation and maintenance, and eliminating the risk of damage to the floor system in the event of malfunction of a module (no longer are there losses of fluid).

However, this solution foresees a connection of the electrical resistors of the module to an external power supply (a junction box). This is achieved by means of an electrical conduit which passes through the thickness of the module and emerges from its support base. The conduit is generally of the semi-rigid type, ending in a horizontally bent appendage (thus being L-shaped overall). In this way, each conduit connects from the bottom with an equivalent conduit of an adjacent module and then arrives at the power supply. As an alternative to the semi-rigid cable, a flexible electric cable is also used. However, given that the cable exits from the base of the module, this solution necessitates a raised support frame, or one which raises the modules from the flooring by a certain amount. In this way, the frame holds up the modules, which may be electrically interconnected from the bottom, forming a flat surface.

This solution is functional in that, both during the installation phase and during maintenance, it allows the operator to work in ample space beneath the raised modules, thereby simplifying the operation of connecting and maintaining the modules.

However, on the other hand there is the requirement to manufacture a frame for supporting and raising the modules themselves. It is therefore obvious that such a frame involves a considerable increase in the costs of production as well, of course, an increase in the time taken to implement and complete the works.

### Summary of the invention

The aim of the present invention is therefore to provide an innovative type of heated modular flooring provided with electrical heating resistors, which at least in part resolves the above-mentioned technical disadvantages.

A particular aim of the present invention is to provide heated modular flooring which does not require a raised support frame, as a result of which it is particularly easy to assemble and economical to produce, while keeping its features of ease of assembly and maintenance unchanged.

These and other aims are therefore achieved with the present module 1 for forming a heating flooring, in accordance with claim 1.

The module foresees electrical means (5) for generating heat, and a supply cable (6) for supplying the electrical means (5) with electric power.

In accordance with the invention, the module is configured in such a way that, when placed side by side and in substantial contact with another module (1), at least one channel (40) is produced for the passage of the supply cable (6), said channel (40) running along at least part of the line of juxtaposition (50, 60, 50', 60') of the modules.

The line of juxtaposition is the line of side-by-side positioning of two or more modules, and consequently follows the sides or the perimeter of the modules positioned side by side.

In this way, all the above-mentioned technical problems are easily resolved.

The cable can now pass within the said channel which borders the two side-by-side modules, and does not emerge from the support base of the same module, as in the prior art. In particular, the cable now follows a direction along the outer perimeter of the modules that are brought alongside each other, as a result no longer interfering with the arrangement of the module directly on the ground. In this way, the raising frame is no longer necessary, and the assembly procedure is now fast and economical.

Further advantages may be inferred from the dependent claims.

### Brief description of the drawings

Further features and advantages of the present module according to the invention will become clearer from the description below of a number of embodiments, which are given by way of non-limiting example, with reference to the attached drawings, wherein:
- Fig. 1 shows an axonometric view of the entire module 1 according to the invention, in an upside-down position with respect to that of mounting on the ground;
- Fig. 2 still shows the same axonometric view of the whole module, wherein are shown the shapes of the lateral borders of the module which serve to form the male-female coupling between two or more side-by-side modules;
- Figs. 3 and 4 are an enlargement of said lateral borders;
- Fig. 5 shows an example of a dwelling wherein said modules are arranged to form the floor system, some of them being provided with a thermal probe (S);
- Figs. 6 and 7 show an example wiring harness of the electrical resistors present in each module in such a way as to be able to have maximum power or half power;
- Figs. 8 and 9 detail the solution for constructing the electrical resistors;
- Fig. 10 is a cross-section which shows three modules side by side in succession, with their male-female coupling in such a way as to form the through-channel for the electricity supply cables;
- Fig. 10b shows a single module in cross-section to demonstrate tooth and indentation for the male-female coupling.
- Figs. 11 to 16 are views which demonstrate the passage of the cable(s) within the channels which form after the modules come alongside one another;
- Fig. 17 shows a portion of resulting flooring;
- Figs. 18 to 26 show the conformation of the four sides of each module such as to form the reference points of male-female coupling when a module comes alongside another module.

### Description of some preferred embodiments

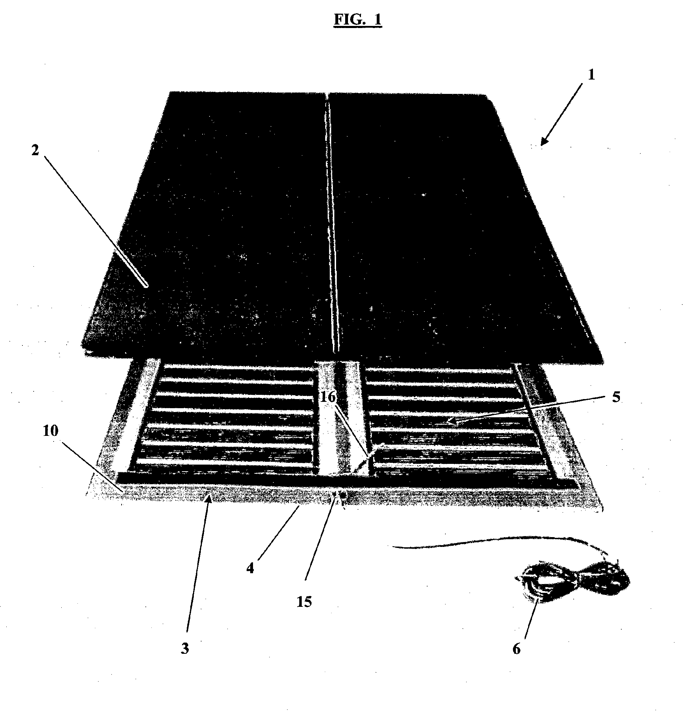

Fig. 1 describes a module 1 for forming a flooring system according to the invention.

The module foresees a base 2, which is the one intended to be supported directly in contact on the flooring. Fig. 1 therefore represents the module rotated in the opposite direction to the true direction of assembly, solely for ease of description.

The base 2 may be made of a multiplicity of different materials. For example, if it is decided to confer insulating properties on the base 2, the range of materials may then be of the insulating type, for example EPS, EPX, cork, woodfibre, etc. In this manner, the base 2 insulates the entire module from the underlying flooring on which it directly rests, thus forcing the heat to diffuse in the opposite direction, i.e. upwards. As will be further clarified below, the heat produced is therefore prevented from passing through the insulating panel.

The electric panel 3, which is responsible for the heat production, is then carefully positioned on the base 2.

Structurally, the electric panel 3 comprises a panel 4 which forms a planar surface 4 on which is extended an electrical surface 5 responsible for the production of heat. The electrical surface 5 is formed by a plurality of electrical resistors on which current flows.

The panel 4 may also be made with various natural materials commonly used in construction and bio-construction. For example, gypsum fibre or magnesite, which contribute to the production of a dry block, may be used.

A sheet 10, for example of aluminium, may be inserted between the electrical surface 5 and the underlying panel 4, the function of which sheet is to render the diffusion of heat even more homogeneous.

Obviously, this sheet 10 is not essential to the invention and may of course be omitted without thereby moving away from the present inventive concept.

The electrical resistors are supplied by connecting them to a junction box installed in the dwelling intended to receive this type of flooring. For this purpose, Fig. 1 shows the electrical resistors 5 and the cable 6 for powering them, which is intended to be connected to the above-mentioned junction box (not shown for reasons of simplifying the drawing, because it is well known and not a subject of the present invention).

Each module 1, precisely as shown in Fig. 1, is generally rectangular in shape and with the electric cable 6 which emerges from the middle of the shorter side.

However, the module may obviously be made with any shape (including square for example) and, independently of the shape of the module, the cable may emerge from any side, including in asymmetric positions.

The electrical resistors 5 are preferably formed of carbon fibres with conductive trails composed, for example, of copper and silver and some other conductive material.

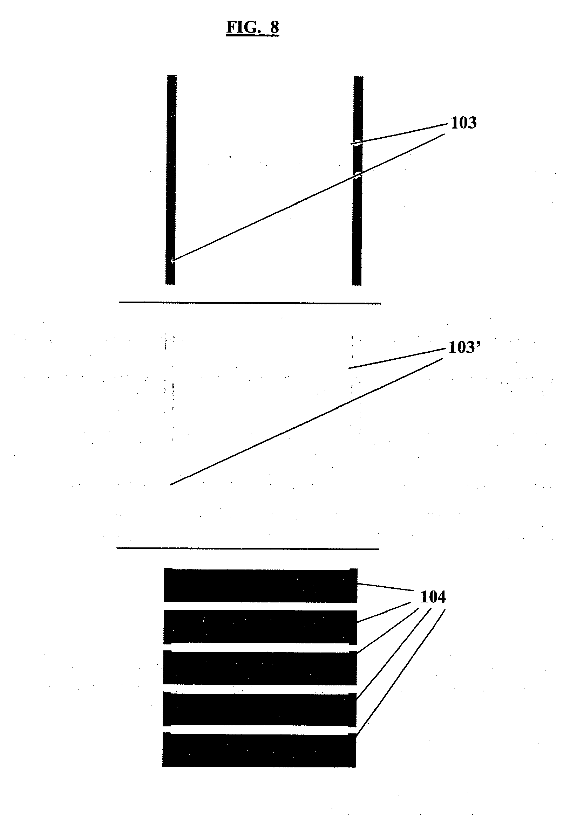

Fig. 8 shows separately the components which make up the electrical surface. In particular it identifies with the reference numerals 103 and 103' the conductive trails in copper and silver respectively. The advantage in using copper tape is that of having an elevated electrical and thermal conductivity exceeded only by silver. Furthermore, it is highly resistant to corrosion on account of the adherent patina which forms spontaneously on the surface.

Silver further optimises heat conductivity and transmission.

The electrical resistance is in fact created by a series of resistors made of graphite or carbon fibre 104 interconnected in parallel by the conductive trails (103, 103'). The use of graphite enables elevated temperature resistance. Moreover, besides guaranteeing a low probability of breakage, the parallel arrangement enables an elevated flexibility of the foil to be a achieved. The film is therefore obtained by superimposing the copper and silver tapes on the parallel-positioned resistors.

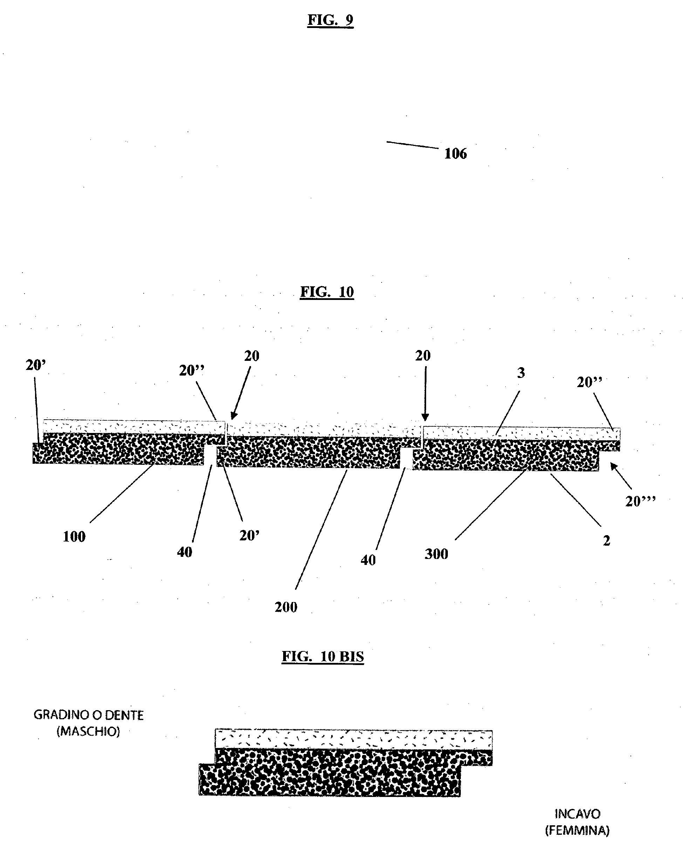

The vertical conductive strips (103, 103') are positioned on the foil formed by the parallel resistors 104 and fixed thereto so as to form the electrical surface 5. To this end, the foil 104 and the strips 103, 103' are packaged together by means of another upper and lower foil 106 shown in Fig. 9. This is a foil of polyethylene terephthalate in semi-crystalline form which ensures good electrical insulation, as well as having an elevated mechanical resistance and a long life. The foil 106 may either have holes punched in it to promote adhesion and avoid and sticking, or be continuous.

Referring to Fig 1, the reference numeral 15 identifies a cable closure, preferably made of steel, for blocking the cable in position. The reference numeral 16 indicates the thermal probe which is capable of detecting the temperature produced by the resistors. Preferably, a single thermal probe is present for each environment covered with this flooring system.

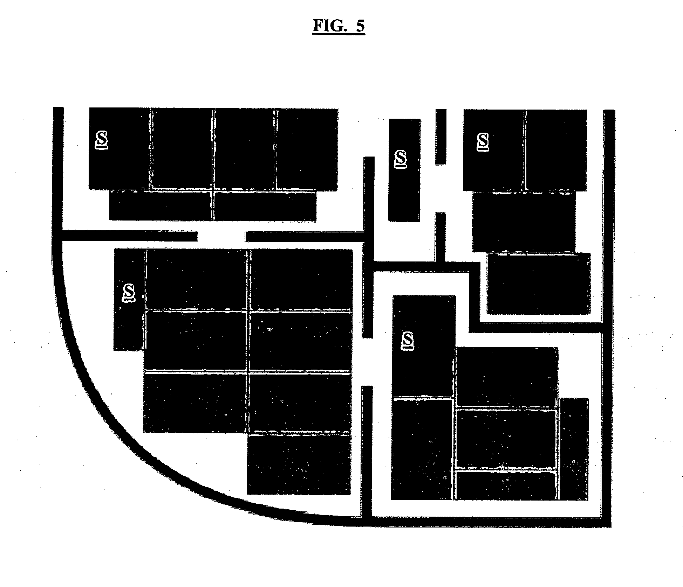

For this purpose, fig. 5 shows an example of a dwelling provided with such modules arranged to create said flooring, and indicates with a label (S) the modules provided with said probe. The figure identifies precisely how a single probe is applied in each room (and therefore prearranged in a single module per room). However, obviously nothing prohibits a plurality of probes from being applied in each room of the dwelling.

Use of the probe enables a manual or automatic temperature regulation system to be implemented. The probe (S) detects the temperature and may send a certain detected temperature signal to a control unit with which it is put in communication. The control unit verifies the temperature value received and automatically checks the possibility of switching the resistors on and off on the basis of reaching a certain pre-set threshold reference value of the temperature.

Alternatively, the user may act by manually modulating this circuitry, for example by actuating a regulator knob or digital switch, independently of the value detected by the probe. In this way, the voltage (tension) or amperage (current) may be regulated by means of an external device. The power of the module and thus its consumption can therefore be regulated, more or less as happens for a conventional heating system (for example by regulating the power within the range between 0 W and 175 W, as will be made clearer in what follows immediately below).

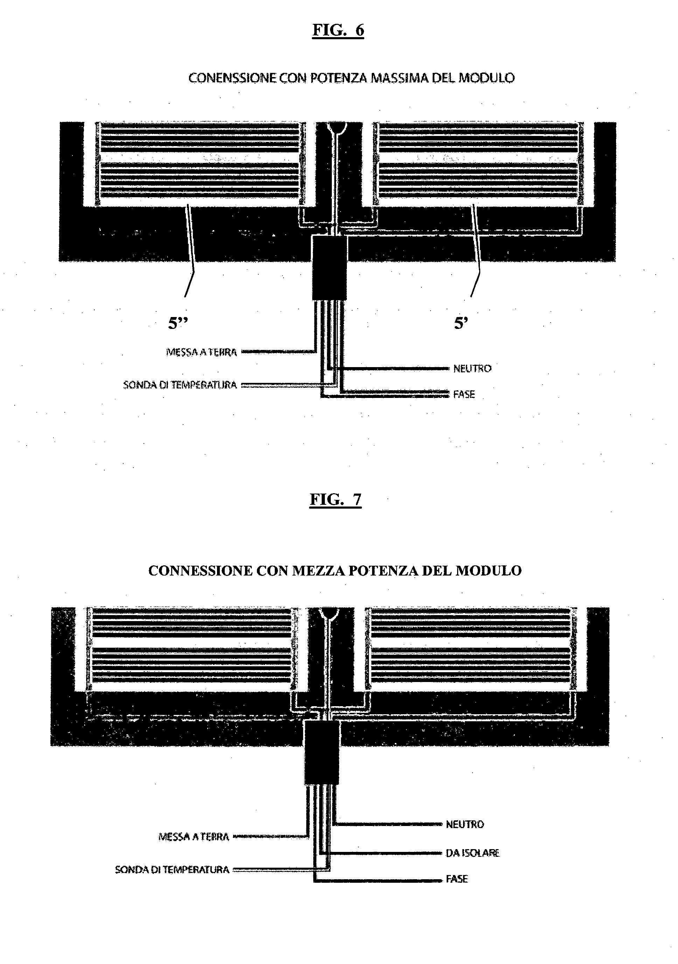

Fig. 6 and Fig. 7 show that it is possible to effect a wiring harness of the resistors such that the module may function at maximum power (350 W) or at half power (175 W).

The modules may preferably provide for two rows of resistors (5', 5") the resistors of which, in each row, are all positioned in parallel with each other. The parallel arrangement means that in the event of failure of a resistor within the row, said failure does not interrupt the functioning of the module as a whole.

The two rows positioned in parallel mean that, in the event of failure of one thereof, at least the second is functioning.

In the case of Fig. 6, the two cables which lead to the two rows (5', 5") of resistors positioned side by side with each other are connected in phase, and the cable in common between the two rows is connected in neutral. In the case of Fig. 7, one of the two rows is set in phase, while the other row excluding the common cable is set in neutral. This confers great versatility in the wiring harness, immediately enabling an assembly at two different standard power values (350 W or 175 W).

Each module has its own cable and wiring harness independently of the other modules, so that failure of a module does not block the functioning of the whole flooring system.

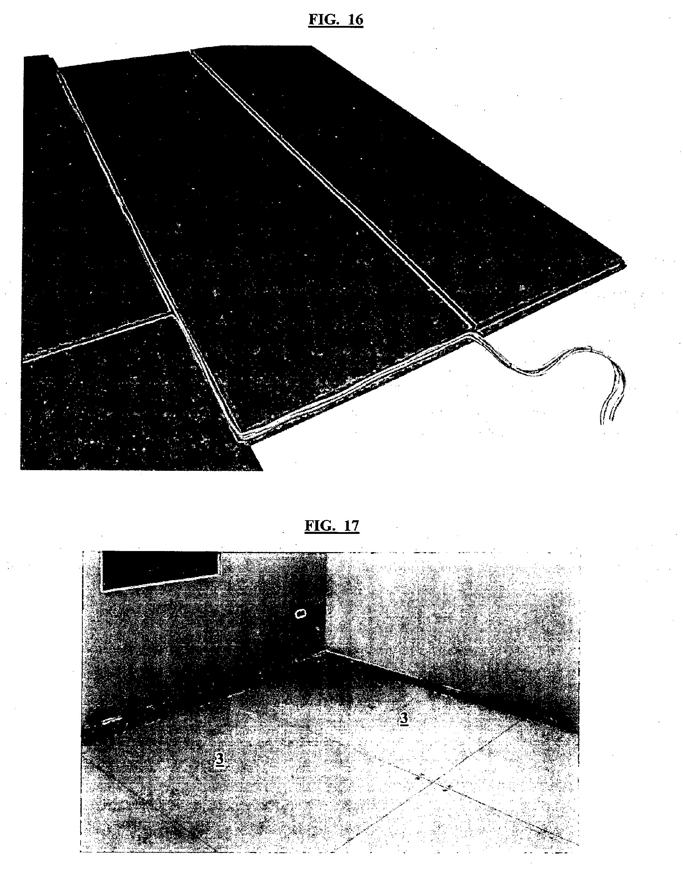

To continue with the structural description of the invention, Fig. 10 shows an example of side-by-side positioning of three modules (100, 200, 300), it still remaining valid that any number of modules may be positioned alongside one another. In particular, it is evident that the elaboration of the sides is such as to form a male-female coupling 20 which enables a precise side-by-side positioning with a precise point of reference. This side-by-side positioning is such that the panel 3 of a module is positioned alongside a successive panel 3 of an adjacent module with a substantial continuity, as shown for example in Fig. 17. In particular, again as shown in Fig. 10 and as made clearer immediately below, this male-female coupling 20 is such as to create a through channel 40 for the passage of electric cables when a module is placed alongside in substantial contact with one following. The cable(s) thus run at least in part along the perimeter of the module, and so without interfering with the side-by-side positioning and meaning that a raising frame is no longer required. This male-female coupling furthermore allows the elimination of thermal bridges which would otherwise be seen to be created. By thermal bridge is meant the discontinuity in the insulating material which has a negative impact on the thermal insulation of the flooring system.

Going further into the structural detail of this male-female coupling, it is achieved by producing the sides of each module in the following manner.

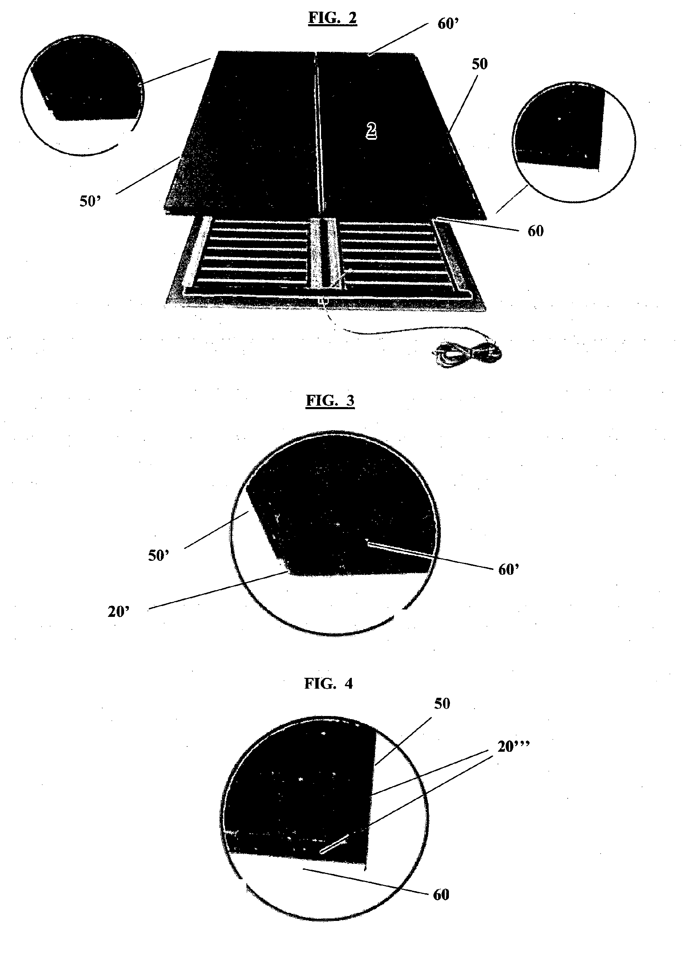

Each module (see for example Figs. 2, 3 and 10b) provides - along one of its longer sides 50'and along a shorter side 60', consecutive to said longer side 50'-for the formation of the step 20', while the opposite longer side 50 and the consecutive shorter side 60 form the hollow 20"' (see Figs. 2 and 4, and 10b). The step and the hollow are obtained at the level of the panel 2. It will be remembered that, in Fig. 2, the module is shown upside down relative to assembly.

During assembly, to a module's side having a step there corresponds a side of a module placed alongside that has a respective receiving hollow (see Fig. 10). In this way, the step of a module is inserted into the receiving hollow of the adjacent module, producing the coupling in a precise manner. The length of the step 20' is less than the depth of the hollow 20"' so that, when a module is positioned alongside another, there remains the space 40 which forms a through channel notwithstanding that the panels 3 are in contact with one another.

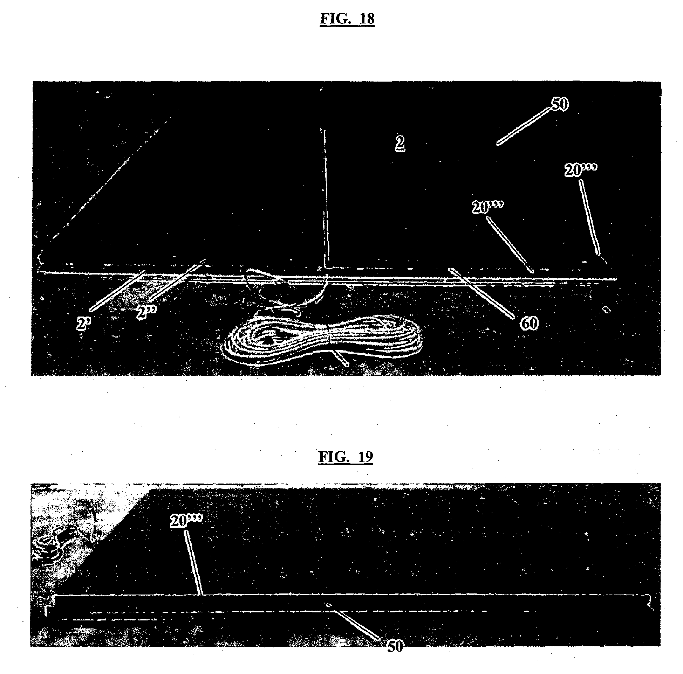

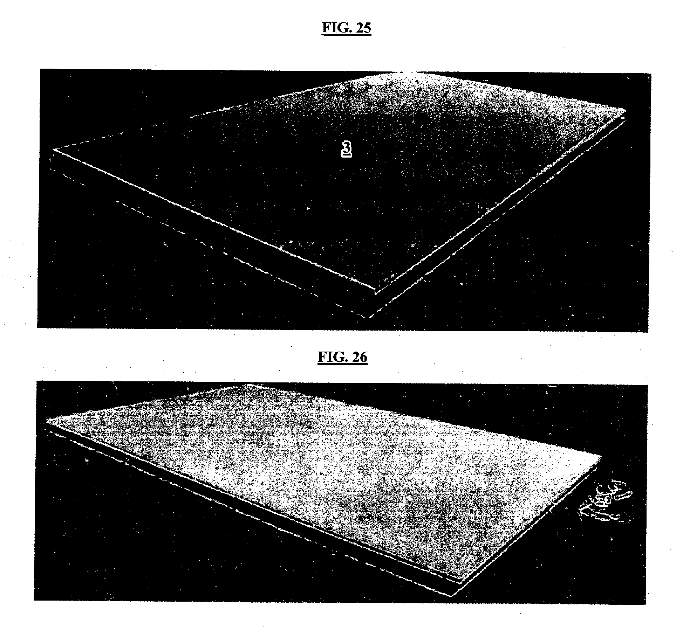

Figs. 18 to 26 very clearly show the profile of each module for the purpose of showing these above-mentioned hollows and steps.

For example, Fig. 18 inverts the module about the panel 2, exactly as in Fig. 2, as a result revealing the sides 50 and 60 with the respective hollow 20"'. Fig. 19, which follows, shows the hollow 20"', still of the side 50.

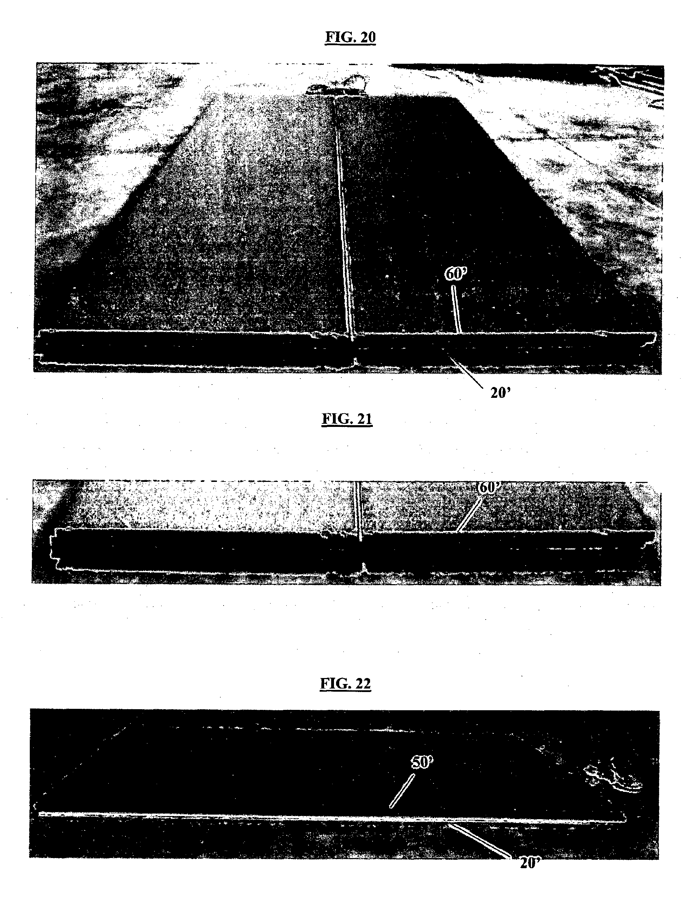

Figs. 20, 21 and 22 show the other two successive sides (50', 60') which, however, form the step 20' or tooth 20' capable of insertion into the receiving hollow 20"' when a module comes alongside another module.

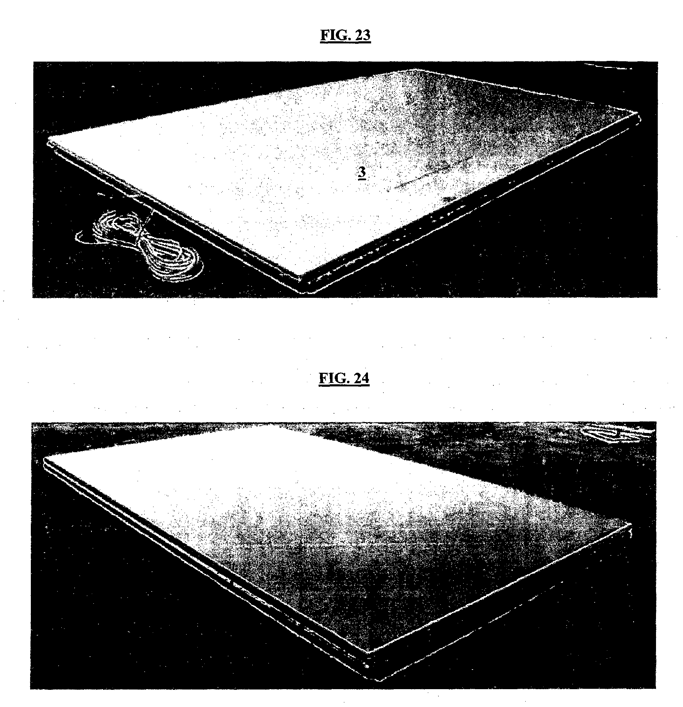

In the same way, for reasons of clarity, figures 23 to 26 show the same module, rotated about the panel 3 and therefore in the assembly position, showing the above-mentioned hollows and steps.

It should be noted that the panel 2, specifically so as to be able to produce, along its perimeter, a profile such that two consecutive sides form the step and the other two form the hollow, is constructed by superimposing two layers of material (2' and 2") as if there were two independent panels appropriately positioned one on top of the other in an out-of-phase position (see for example Fig. 18).

In fact, therefore, it is as if the module were composed of three superimposed layers of panel (2', 2", 3). Obviously, the panel 2 may be produced in a single layer.

Moreover, also obviously, step and hollow may be obtained in the preferred sequence.

For example, a solution is conceivable wherein a single hollow or a tooth is present on only one of the sides. In this case, the module has a single fixed position alongside a single complementary module.

Alternatively, a module is conceivable having one side provided with a hollow and one side provided with a step.

For example, a solution is conceivable wherein each side forms a step over half its length and a hollow over the remaining half.

The solution described in Fig. 2 and in Figs. 18 to 26 obviously has the advantage of conferring great coupling flexibility in that a module may be coupled to one or more modules on all four of its sides, bringing together not only sides of equal dimensions (long side-long side), but also sides of differing length (long side-short side).

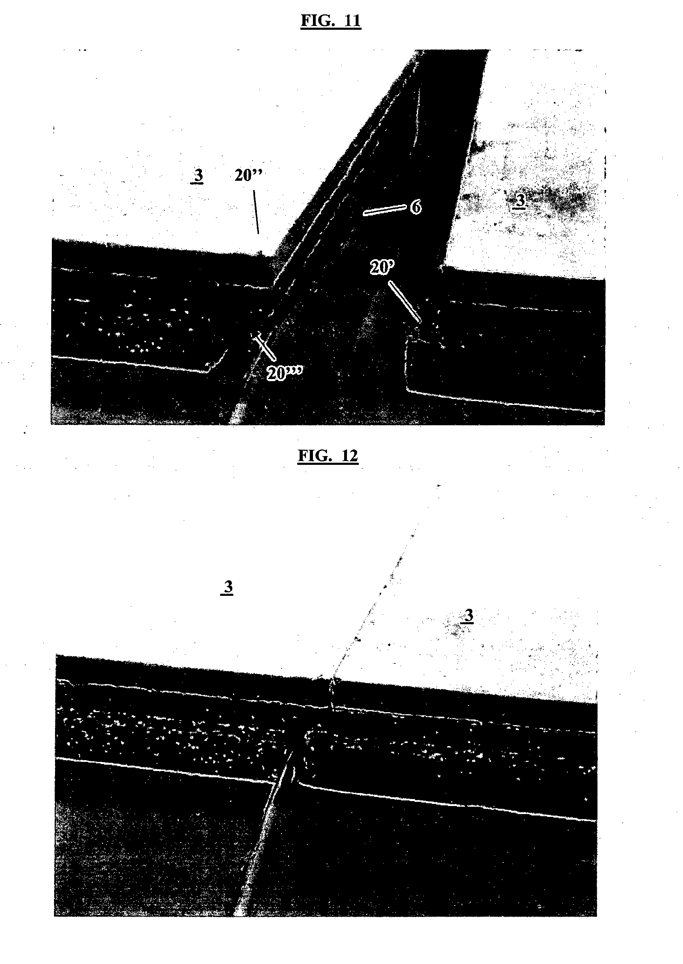

Figs. 11 to 16 show clearly various examples of cable passage and possibilities of combining the modules with one another.

For example, Fig. 11 shows the cable 6 as it exits from one module with two modules at a distance and ready to be brought alongside one another. The figure shows well the seat or hollow 20"' performed by one side of a module and the step 20' of the module to be brought alongside, which is inserted into the hollow.

Fig. 12 shows the juxtaposition that has occurred with the panels 3 in contact with one another and the underlying passage for the cable 6 through the channel 40 which forms after they are brought side by side.

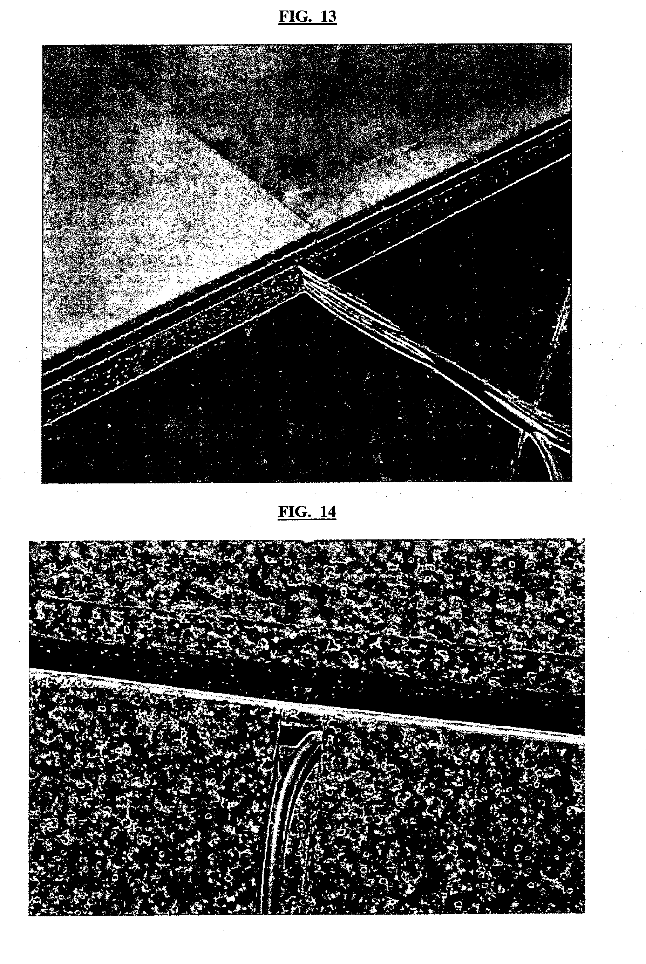

Fig. 13 shows the passage of a certain number of cables originating from a plurality of side-by-side modules and each one of which is then connected to the junction box. This solution results in failure of a single module not affecting the functioning of the other modules.

For reasons of clarity, Figs. 14 to 16 turn the modules upside down so that the direction of passage of the cables can still be seen.

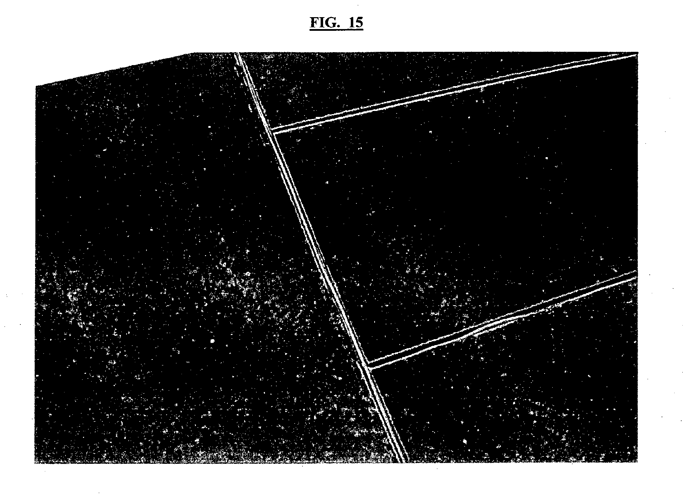

For example, Fig. 15 shows three modules brought alongside one another along their longer sides and then with their shorter side brought side-by-side with a longer side of a further module positioned transversely thereto. Fig. 16 is another view.

It is thus evident that this male-female system is extremely flexible in allowing the modules to be coupled with one another, even bringing them side-by-side with one another on different sides (or not necessarily a long side side-by-side with a short side).

It is also obvious that the formation of the through-channel is also obtainable in other ways and not necessarily by male-female coupling. Male-female coupling in fact has the advantage of creating a precise reference point in the coupling between modules but, for example, another solution could provide for the production of four vertical sides that are planar and designed so as to form a hollow in the shape for example of a V, a C or an upturned U. When a side is brought alongside an opposite one, these hollows in fact form a through-channel for the cable.

Alternatively, a single side may have a hollow while the side of the adjacent module to be brought alongside may be planar.

Having described structurally all the elements essential to the invention, there now follows a description of the assembly of the invention.

The first step is carefully placing all the panels in succession directly on the flooring system to be covered without the need to create any support frame raising them from the ground. The reason for this is that, in a departure from the prior art, the cable passage occurs along the outer perimeter of the module within the channel 40 which forms after juxtaposition of one module with a next. The module is thus devoid of cables passing beneath it, and can rest quiescently and stably on the ground. Whenever a module comes alongside another module, passage of the cable is arranged along the channel (see for example Figs. 11 and 12 in succession). Certainly, the modules, which are of standard dimensions, will cover almost the totality of the treadable surface to be covered apart from some lateral edges, which may be filled by making available a few corners cut to measure.

The corners may be of any type, even different from those of the present invention (or absolutely devoid of electrical resistors) and other methods of finishing the covering may however be implemented.

Finally, once the flooring is covered, one may proceed to fix all the panels to the ground.

To avoid fixing errors, the panels are already provided with holes at the four corners, which holes pass through the whole thickness of the module. A suitable fixing nut and bolt may be inserted into,the holes.

Alternatively, the panels may obviously be provided devoid of holes with indication of a drilling point, to avoid the operative erroneously making holes in an area where the electrical resistors are arranged.

The operation of fixing to the ground with a nut and bolt is not, however, indispensable and is done to avoid any cracks in the finishings caused by setting of the furniture. Finally, as clarified immediately below, the actual fixing occurs via production of the top coating, which constitutes the treadable plane.

At this point, one may proceed to the wiring harness of the cables so as to connect them to the power supply of the dwelling in which the flooring system has been installed, or to the junction box.

Finally, the flooring system is covered with the modules (see, for example, Fig. 17), which may then be externally covered as desired, for example by fixing thereon a wood parquet, laminates or tiles. To this end, the cementitious material is spread, and one proceeds to fixing of the panels which will physically form the treadable surface.

## Claims

1. A module (1) for forming a heating flooring system and comprising:
- Electrical means (5) for the generation of heat and a power cable (6) for supplying said electrical means (5) with electricity;
**characterised in that** the module is configured in such a way that, when brought alongside in substantial contact with another module (1), at least one channel (40) is produced for the passage of the supply cable (6), said channel (40) running along at least part of the line of juxtaposition (50, 60, 50', 60') of the modules.

2. A module (1) according to claim 1, wherein at least one side (50, 60, 50', 60') of a module has a profile such that, when brought alongside a side of a further adjacent module, it forms said canal (40).

3. A module (1) according to claim 1 or 2, wherein a module comes alongside another module by means of male-female coupling (20) such that said channel (40) is formed.

4. A module (1) according to one or more of the preceding claims, wherein at least one side (50, 60, 50', 60') of the module forms a projection (20') of such a length as to insert partially into a receiving seat (20"') of an adjacent module when said modules are brought alongside one another, in such a way as to form said channel.

5. A module (1) according to one or more of the preceding claims, wherein a side of the module forms a projection (20') and a further side forms a hollow (20"').

6. A module (1) according to one or more of the preceding claims, wherein two consecutive sides (50', 60') of the module form a projection (20') and two consecutive sides of the module (50, 60) form the receiving seat (20"') adapted to receive said projection.

7. A module (1) according to claim 1, wherein said electrical means provide a plurality of electrical resistors (5', 5").

8. A module (1) according to claim 7, wherein said plurality of electrical resistors are positioned in parallel with one another.

9. A module (1) according to claim 7 or 8, wherein are provided two rows (5', 5") of electrical resistors (5' 5").

10. A module (1) according to claim 9, wherein said two rows are connected in parallel with one another.

11. A module (1) according to claim 9 or 10, wherein said two rows of electrical resistors are connected to the power cable (6) in such a way that both the two rows of resistors or only one of the two rows is electrically powered.

12. A module (1) according to one or more of the preceding claims, wherein a base (2) is provided which is adapted to be position carefully on the ground and on which an electric panel (3) comprising said electrical means (5) is pre-arranged.

13. A module (1) according to claim 12, wherein the base (2) is made of an insulating material.

14. A module (1) according to one or more of the preceding claims, wherein a temperature probe (16) is provided.

15. A flooring system **characterised in that** it is composed of one or more modules (100, 200, 300) in accordance with one or more of the preceding claims, which modules are side-by-side with each other.
